Europäisches Patentamt

European Patent Office

Office européen des brevets

(11) Publication number: **0 624 450 A1**

## EUROPEAN PATENT APPLICATION

(21) Application number: **94201286.5**

(22) Date of filing: **09.05.94**

(51) Int. Cl.⁵: **B29C 47/92**, B29C 47/50

(30) Priority: **13.05.93 NL 9300825**

(43) Date of publication of application:
**17.11.94 Bulletin 94/46**

(84) Designated Contracting States:
**AT CH DE DK ES FR GB IE IT LI NL SE**

(71) Applicant: **Machinefabriek "de Rollepaal" B.V.**
**1, Rollepaal**
**NL-7701 BR Dedemsvaart (NL)**

(72) Inventor: **Jansen Klomp, Hendrik Jan Carel**
**28, Julianastraat**
**NL-8019 AW Zwolle (NL)**
Inventor: **van der Ploeg, Frederik**
**77, H. Dunantstraat**
**NL-7721 HR Dalfsen (NL)**

(74) Representative: **Iemenschot, Johannes**
**Andreas Ir. et al**
**Exterpatent B.V.,**
**P.O. Box 3241**
**NL-2280 GE Rijswijk (NL)**

(54) Method and device for extruding elongated articles made of plastic, and regulating their wall thickness.

(57) For the extrusion of elongated articles, such as tubular articles or articles in sheet form made of plastic, the material delivered by the extruder (1) is forced by a positive-displacement pump (4) through an extrusion nozzle (3). The average absolute wall thickness of the extruded article (9) is calculated from the volumetric delivery of the positive-displacement pump, the line speed and the nominal dimensions in the transverse direction of the extruded article. A series of measurements is also carried out in a direction at right angles to the lengthwise direction of the extruded article and over the entire surface thereof, in each measurement the value of the variable measured by the measuring element being a measure of the relative wall thickness locally. Periodically, after a stationary state in the extrusion process has been reached, the calculated average absolute wall thickness and the average value of the variable measured by the measuring element (11), inter alia, are used to determine the current relation between the absolute wall thickness and the value of the variable measured by the measuring element. For the regulation of the wall thickness in the lengthwise direction of the extruded article, the line speed is adapted in such a way that the current value of the wall thickness is always essentially equal to the desired value of the wall thickness.

Fig. 2.

Rank Xerox (UK) Business Services
(3.10/3.09/3.3.4)

The invention relates to a method for extruding elongated articles, such as tubular articles or articles in sheet form made of plastic, and regulating their wall thickness, in which method the material delivered by the extruder is forced through an extrusion nozzle, the average absolute wall thickness of an extruded article is calculated, a series of measurements is carried out in a direction at right angles to the lengthwise direction of the extruded article and over the entire surface thereof, in each measurement the value of the variable measured by the measuring element being a measure of the relative wall thickness locally, periodically, after a stationary state in the extrusion process has been reached, the calculated average absolute wall thickness and the average value of the variable measured by the measuring element, inter alia, are used to determine the current relation between the absolute wall thickness and the value of the variable measured by the measuring element, and for the regulation of the wall thickness in the lengthwise direction of the extruded article the line speed is adapted in such a way that the current value of the wall thickness is always essentially the same as the desired value of the wall thickness.

Such a method is known from Dutch Patent Application No. 8801813 in the name of Applicant.

In the case of this known method the average absolute wall thickness of the extruded article is calculated from the quantity by weight of material fed to the extruder per unit time, the line speed, the specific weight of the material and the nominal dimensions in the transverse direction of the extruded article. This calculation of the average absolute wall thickness is time-consuming and relatively inaccurate, since it is necessary to convert the weight of the quantity of material fed to the extruder per unit time and the volume of the quantity of material coming out of the extruder per unit time. The specific weight of the material has to be used for this conversion. There is no indication whatsoever of the accuracy of the calculation or its possible fluctuation. Besides, the known method is less suitable for use in the case of single-screw extruders, since such extruders do not produce any guaranteed output. The output of single-screw extruders depends on a large number of factors, including the counterpressure in the extrusion nozzle, the coefficient of friction between the plastic material and the housing of the extruder, on the one hand, and the material and the extruder screw, on the other hand (which coefficient of friction itself depends in turn on the temperatures of the different elements and the local pressure prevailing), the speed of rotation of the screw, the geometry of the screw, and the quality of the material which has been fed in.

The object of the invention is to improve the method mentioned at the beginning, in such a way that the wall thickness of the extruded article can be regulated within narrow limits, in particular when a single-screw extruder is being used for extrusion of the articles.

This object is achieved according to the invention through the fact that the material is forced through the extrusion nozzle by means of a positive-displacement pump, and the average absolute wall thickness is calculated from the volumetric delivery of the positive-displacement pump, the line speed and the nominal dimensions in the transverse direction of the extruded article.

Use of this method, in which the quantity of material forced through the extrusion nozzle is independent of the output of the extruder and depends only on the delivery of the positive-displacement pump, means that the average absolute wall thickness can be calculated within narrow limits, so that a very accurate regulation of the wall thickness is possible, in particular where a single-screw extruder is being used.

A geared pump is preferably used as the positive-displacement pump.

The use of a geared pump between the extruder and the extrusion nozzle, in order to ensure that output differences from the extruder do not have any influence on the quantity of material forced through the extrusion nozzle, is known per se (see, for example, US-A-4,171,193). However, in the case of this known application there is no regulation of the wall thickness of the extruded article in which the average absolute value of the wall thickness is calculated.

The invention also relates to a device for extruding elongated articles, such as tubular articles or articles in sheet form made of plastic, and regulating their wall thickness, comprising an extruder with a material feed device, an extrusion nozzle disposed downstream of the extruder, a measuring element disposed downstream of the extrusion nozzle, by means of which measuring element a series of measurements can be carried out in a direction at right angles to the lengthwise direction of the extruded article and over the entire surface thereof, in the case of each measurement the value of the variable measured by the measuring element being a measure of the relative wall thickness locally, a computer for, inter alia, calculating the average absolute wall thickness of an extruded article and determining the relation between the absolute wall thickness and the value of the variable measured by the measuring element, and also means for regulating the wall thickness of the extruded article, comprising a regulating element for adapting the line speed on the basis of the difference between the current value of the wall thickness and the desired value of the wall thickness, characterized in that a positive-displacement pump is disposed between the extruder and the extrusion nozzle, for forcing the material delivered by the extruder through the extrusion nozzle, and in that the computer is equipped for, inter alia, calculating the average absolute wall thickness from the speed of rotation of the positive-displacement pump, which average absolute wall thickness is essentially proportional to the volumetric delivery of the pump, the line speed and the nominal dimensions in the transverse direction of the extruded article.

The invention will be explained in greater detail in the example of an embodiment which follows with reference to the appended drawing, in which:

Fig. 1 shows very diagrammatically a device according to the invention for extruding tubes or tubular articles made of plastic, and

Fig. 2 shows a block diagram in which the method according to the invention is illustrated.

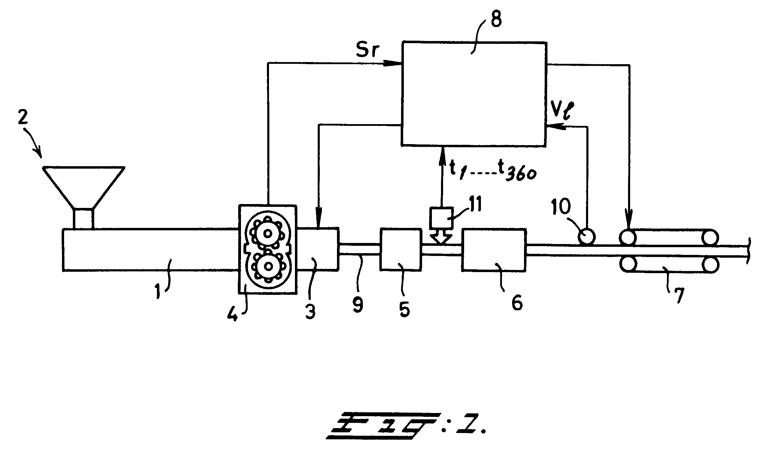

Figure 1 shows diagrammatically a device according to the invention for extruding tubes or tubular articles made of plastic. The device comprises an extruder 1 with material feed apparatus 2, an extrusion nozzle 3, a positive-displacement pump, in the form of a geared pump 4, disposed between the extruder 1 and the extrusion nozzle 3, a calibration device 5, a cooling device 6, and a drawing machine 7.

The extruder 1 is in particular a single-screw extruder which is generally used for the extrusion of tubes from polyalkene material.

The device also comprises a computer 8 in which the various calculations and signal processing operations necessary for regulating the wall thickness of the extruded tube 9 are carried out. The computer 8 is connected to means for measuring the speed of rotation $S_r$ of the geared pump 4, and for measuring the line speed $V_1$, i.e. the speed at which the extruded tube is coming out of the extruder. The line speed $V_1$ can be measured by means of, for example, a measuring wheel 10 resting against the extruded tube. The computer 8 is connected to a measuring element 11 for measuring a variable which is a measure of the relative wall thickness of the extruded tube.

In the example of an embodiment shown here, the measuring element 11 is an ultrasonic measuring element which is known per se and which produces ultrasonic vibrations, transmits said vibrations through the wall of the extruded tube and at least detects the echo caused by the surface of the wall of the extruded tube facing away from the measuring element. The measuring element rotates over the periphery of the extruded tube and at a number of points distributed over the periphery, for example 360 points, measures the echo time t, i.e.

the time difference between the transmission of a particular vibration and the reception by the measuring element of the echo caused by the surface of the wall of the extruded tube facing away from the measuring element, or the time difference between the reception by the measuring element of the echo caused by the surface of the wall of the extruded tube facing and the echo caused by the surface of the wall facing away from the measuring element. The time difference which must be regarded as echo time depends on the type of measuring element.

The computer is also connected to the temperature regulating device of the extrusion nozzle 3 and to the drive unit of the drawing machine 7.

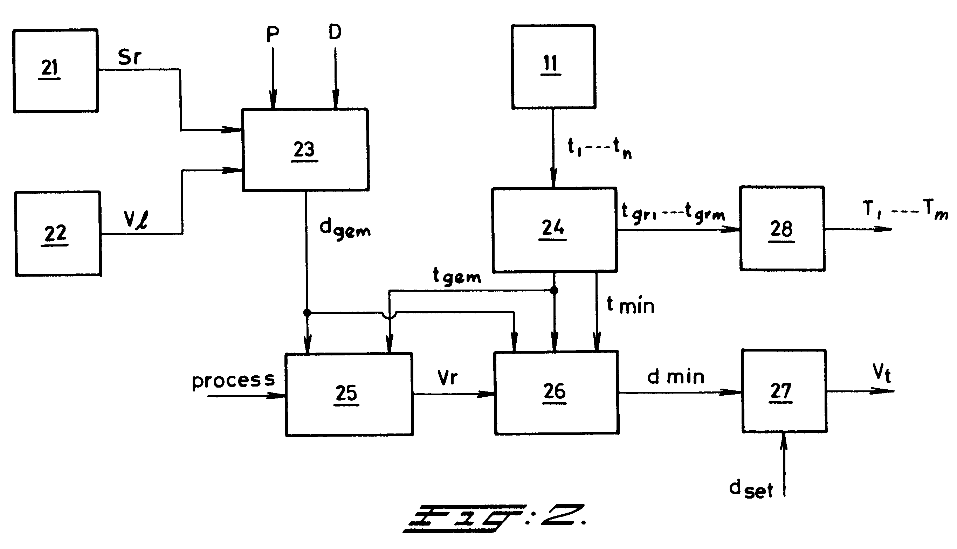

The method according to the invention will now be explained with reference to Figure 2. Figure 2 shows the means 21 and 22 for measuring the speed $S_1$ of the geared pump 4 and the line speed $V_1$ respectively. The measuring element 11 for measuring the echo times $t_1$ to $t_n$ inclusive over the periphery of the extruded article is also shown, n being, for example, 360. Figure 2 also shows a number of computer units 23, 24, 25 and 26, and also two regulating units 27 and 28, the function of which will be explained in greater detail below.

When the extrusion process is in a stationary phase, the speed of rotation $S_r$ of the geared pump 4 and the line speed $V_1$ are measured, in order to calculate the average absolute wall thickness $d_{gem}$ of the extruded tube. The average absolute wall thickness $d_{gem}$ of the extruded tube is calculated by the computer unit 23 from the speed of rotation $S_r$ of the geared pump 4, the relation P between the volumetric delivery of the geared pump 4 and the speed of rotation $S_r$ thereof, the line speed $V_1$, and the nominal diameter D of the extruded tube. The echo time t is also measured by the computer unit 11 at n points (for example, 360 points) distributed over the periphery, so that n echo times $t_1$ to $t_n$ inclusive are obtained. The average echo time $t_{gem}$ over the periphery and the minimum echo time $t_{min}$ are determined by the computer unit 24 from these echo times. The computer unit 25 also calculates, in a manner which is familiar to a person skilled in the art, a proportionality factor $V_r$, which indicates the connection between a change in the absolute wall thickness d and the corresponding change in the echo time t. The proportionality factor $V_r$ depends on the process circumstances, and is therefore constantly recalculated (when the extrusion process is in a stationary state). In the wall thickness area around the calculated average absolute wall thickness $d_{gem}$ the factor $V_r$ is regarded as constant, so that in the wall thickness area under consideration a linear relation exists between the absolute wall thickness d and the echo time t. This assumption is justified, since the wall thickness area being considered is small relative to the wall thickness itself. Finally, the computer unit 26 calculates the absolute wall thickness $d_{min}$ appertaining to the minimum value $t_{min}$ of the echo time t viewed over the periphery of the extruded article, by means of the following formula:

$$(d - d_{gem}) : (t - t_{gem}) = V_r$$

The wall thickness of the extruded tube is regulated further as follows.

For the regulation of the wall thickness in the lengthwise direction, the regulating unit 27 compares the minimum absolute wall thickness $d_{min}$ calculated by the computer unit 26 with the desired value $d_{set}$ of the wall thickness d, and on the basis of the difference found the speed $V_1$ of the drawing machine 7 is adapted, in such a way that the calculated minimum wall thickness $d_{min}$ is as close as possible to the desired wall thickness $d_{set}$.

The regulating unit 27 has a certain regulating range around $d_{set}$. The desired value $d_{set}$ of the wall thickness d is therefore set in such a way that it is ensured that the minimum value $d_{min}$ of the wall thickness d does not fall below a particular lower limit, so that the extruded tube is prevented from failing to meet the set standards relating to the minimum wall thickness. The set value $d_{set}$ will thus generally lie slightly above the abovementioned lower limit.

The wall thickness in the peripheral direction of the extruded article is regulated in such a way that the values of the echo times measured over the periphery are the same as far as possible. For this purpose, the echo times $t_1$ to $t_n$ inclusive measured by the measuring element 11 are divided by the computer unit 24 into a number of connecting identical groups and averaged per group. The number of groups corresponds to the number of sectors into which the extrusion nozzle 3 is divided, viewed over the periphery. If the extrusion nozzle 3 is divided into m sectors, the echo times $t_1$ to $t_n$ inclusive are divided into m groups, and m average echo times $t_{gr1}$ to $t_{grm}$ inclusive per group are thus obtained. On the basis of these m average echo times, the regulating unit 28 adjusts the temperatures $T_1$ to $T_m$ inclusive of the m sectors of the extrusion nozzle in such a way that the differences between the average echo times $t_{gr1}$ to $t_{gem}$ inclusive per group are minimized. When the temperature of the sectors of the extrusion nozzle 3 is being regulated it is ensured that the average temperature of all sectors remains constant. The extrusion nozzle 3 can be divided into, for example, eight sectors, so that in that case m = 8.

It is pointed out that the regulation described above, based on a calculated average absolute wall thickness $d_{gem}$ of an extruded tube, is known per se. The new aspect in all of it is the way in which the average absolute wall thickness $d_{gem}$ is calculated, using the volumetric delivery of a positive-displacement pump, in the form of a geared pump 4, disposed between the extruder 1 and extrusion nozzle 3.

Due to the fact that thermoplastic materials are poor heat conductors and in the device shown diagrammatically in Figure 1 the extruded tube is cooled only from the outside, in many cases a downward flow of material still occurs during cooling of the tube whose central axis runs in the horizontal direction, so that a uniform wall thickness distribution in the calibration unit 5 becomes a non-uniform wall thickness distribution at the end of the cooling unit 6 (or vice versa). In those cases it is necessary for a correction to be made between the measurement of the wall thickness and its regulation, in order to compensate for the flow of material downwards after the measurement of the wall thickness.

In the example of an embodiment, the regulation of the wall thickness in the peripheral direction is independent of the regulation of the wall thickness in the lengthwise direction of the extruded tube, while the regulation of the wall thickness in the peripheral direction is a very direct regulation. This means that no interaction occurs between the two regulation processes, and it can be ensured that, on the one hand, the wall thickness in the peripheral direction is as uniform as possible while, on the other hand, the minimum wall thickness of the extruded tube does not fall below a particular lower limit.

In the example of an embodiment, the invention is described for use during the extrusion of a tube or tubular article made of plastic. It will be clear that the invention can also be used for the extrusion of sheets or similar articles made of plastic. The measuring element will in that case move over the entire width of the sheet surface in a direction at right angles to the lengthwise direction of the sheet. The invention could also be used in the extrusion of tubular film.

## Claims

1. Method for extruding elongated articles, such as tubular articles or articles in sheet form made of plastic, and regulating their wall thickness, in which method the material delivered by the extruder is forced through an extrusion nozzle, the average absolute wall thickness of an extruded article is calculated, a series of measurements is carried out in a direction at right angles to the lengthwise direction of the extruded article and over the entire surface thereof, in each measurement the value of the variable measured by the measuring element being a measure of the relative wall thickness locally, periodically, after a stationary state in the extrusion process has been reached, the calculated average absolute wall thickness and the average value of the variable measured by the measuring element, inter alia, are used to determine the current relation between the absolute wall thickness and the value of the variable measured by the measuring element, and for the regulation of the wall thickness in the lengthwise direction of the extruded article the line speed is adapted in such a way that the current value of the wall thickness is always essentially equal to the desired value of the wall thickness, **characterized in that** the material is forced through the extrusion nozzle by means of a positive-displacement pump, and the average absolute wall thickness is calculated from the volumetric delivery of the positive-displacement pump, the line speed and the nominal dimensions in the transverse direction of the extruded article.

2. Method according to claim 1, **characterized in that** a geared pump is used as the positive-displacement pump.

3. Device for extruding elongated articles such as tubular articles or articles in sheet form made of plastic, and regulating their wall thickness, comprising an extruder (1) with a material feed device (2), an extrusion nozzle (3) disposed downstream of the extruder, a measuring element (11) disposed downstream of the extrusion nozzle, by means of which measuring element a series of measurements can be carried out in a direction at right angles to the lengthwise direction of the extruded article (9) and over the entire surface thereof, in the case of each measurement the value of the variable measured by the measuring element being a measure of the relative wall thickness locally, a computer (8) for, inter alia, calculating the average absolute wall thickness of an extruded article (9) and determining the relation between the absolute wall thickness and the value of the variable measured by the measuring element, and also means for regulating the wall thickness of the extruded article, comprising a regulating element (7) for adapting the line speed on the basis of the difference between the current value of the wall thickness and the desired value of the wall thickness, **characterized in that** a positive-displacement pump (4) is disposed between the extruder (1) and the extrusion nozzle (3), for forcing the material delivered by the extruder through the extrusion nozzle, and in that the computer (8) is equipped for, inter alia, calculating the average absolute wall thickness ($d_{gem}$) from the speed of rotation ($S_r$) of the positive-displacement pump (4), which average absolute wall thickness is essentially proportional to the volumetric delivery of the pump, the line speed ($V_1$) and the nominal dimensions (D) in the transverse direction of the extruded article (9).

4. Device according to claim 3, **characterized in that** the positive-displacement pump is a geared pump (4).

**FIG: 2.**

EP 0 624 450 A1

FIG:2.

EP 0 624 450 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,Y | NL-A-8 801 813 (WAVIN B.V.) <br> * the whole document * <br> --- | 1-4 | B29C47/92 <br> B29C47/50 |
| Y | INDUSTRIAL AND PRODUCTION ENGINEERING <br> vol. 12, no. 2 , June 1988 , MUNCHEN DE <br> pages 75 - 77 <br> J. ORZECHOWSKI 'Automatic Ultrasonic Wall <br> Thickness Measurement in Pipe Extrusion' <br> --- | 1-4 | |
| Y | US-A-5 122 315 (DARLEY) <br> * abstract * <br> * column 1, line 61 - column 2, line 12 * <br> * column 2, line 46 - line 68 * <br> * column 3, line 15 - line 27 * <br> * column 5, line 24 - line 38 * <br> * claims 1-3; figures * <br> --- | 1-4 | |
| A | DE-A-37 30 043 (REIFENHÄUSER GMBH & CO. <br> MASCHINENFABRIK) <br> * abstract * <br> * figure 1 * <br> --- | 1-4 | |
| A | US-A-4 171 193 (RAHLFS) <br> * abstract * <br> * figure 1 * <br> ----- | 1-4 | TECHNICAL FIELDS SEARCHED (Int.Cl.5) <br><br> B29C |

The present search report has been drawn up for all claims

| Place of search | Date of completion of the search | Examiner |
|---|---|---|
| THE HAGUE | 28 June 1994 | Jensen, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document